# EUROPEAN PATENT APPLICATION

(11) **EP 4 807 166 A1**
(43) Date of publication of application: **16.09.2026**
(21) Application number: 26163771.4
(22) Date of filing: 10.03.2026
(51) Int. Cl.: F02C 9/28, F02C 9/40

(54) **ENGINE CONTROL SYSTEM FOR FUEL MIXING**

(30) Priority: 10.03.2025 US 202519075401
(71) Applicant: Pratt & Whitney Canada Corp., Longueuil, Québec J4G 1A1 (CA)
(72) Inventor: WEINSTEIN, Jeffrey, (01BE5) Longueuil, J4G 1A1 (CA)
(74) Representative: Dehns

(57) **Abstract**

A method includes receiving one or more flight condition inputs (202; 402) at a controller (152; 204; 404), determining a viability of a plurality of fuel mix ratios based on the one or more flight condition inputs (202; 402), selecting a fuel mix ratio of the plurality of fuel mix ratios, dispensing two or more fuels or solutions to a gas turbine engine (100; 218; 418) based on the selected fuel mix ratio, and monitoring performance parameters of the gas turbine engine (100; 218; 418) using a plurality of sensors (144; 220; 420) coupled to the controller (152; 204; 404). The two or more fuels or solutions may include water.

## Description

### TECHNICAL FIELD

This disclosure relates generally to gas turbine engines and processes. More specifically, this disclosure relates to an engine control system for fuel mixing.

### BACKGROUND

An aircraft may include an engine capable of using multiple types of fuel, including aviation fuel (AF), such as carbon-based fuels, and sustainable aviation fuels (SAF), such as hydrogen fuels. Hydrogen fuels run at a different temperature, and their flame speed is a lot higher than traditional carbon-based fuels. This introduces challenges when mixing fuels or converting from AFs to SAFs mid-flight. The same principle applies to other sustainable aviation fuels (SAFs), which also have different combustion parameters and flame characteristics when compared to traditional AFs. Additionally, switching fuels mid-flight will inherently cause some fuel mixing to occur, since constant fuel flow is required to prevent the engine from shutting off. Accordingly, there is a need for improved systems and methods for sustainable aviation fuel and aviation fuel mixing.

### SUMMARY

This disclosure provides an engine control system for sustainable aviation fuel and aviation fuel mixing.

In an aspect of the present invention, a method includes receiving one or more flight condition inputs at a controller, determining a viability of a plurality of fuel mix ratios based on the one or more flight condition inputs, selecting a fuel mix ratio of the plurality of fuel mix ratios, dispensing two or more fuels or solutions to a gas turbine engine based on the selected fuel mix ratio, and monitoring performance parameters of the gas turbine engine using a plurality of sensors coupled to the controller.

Any single one or any combination of the following features may be used with the above embodiment. The method may further include selecting another of the plurality of fuel mix ratios based on the performance parameters of the gas turbine engine. The two or more fuels or solutions include a sustainable aviation fuel and a carbon-based aviation fuel. The performance parameters may include an operating temperature, an operating pressure, or a rotational speed of the gas turbine engine. The two or more fuels or solutions include a sustainable aviation fuel, a carbon-based aviation fuel, and a premixed solution. The two or more fuels or solutions includes water. The premixed solution includes a sustainable aviation fuel and a carbon-based aviation fuel mixture.

In another aspect of the present invention, a system includes a gas turbine engine, a plurality of sensors configured to monitor performance parameters of the gas turbine engine, and a controller coupled to the plurality of sensors and the gas turbine engine including at least one processor configured to cause the system to: receive one or more flight condition inputs, determine a viability of a plurality of fuel mix ratios based on the one or more flight condition inputs, select a fuel mix ratio of the plurality of fuel mix ratios, dispense two or more fuels or solutions to the gas turbine engine based on the selected fuel mix ratio, and monitor performance parameters of the gas turbine engine using the plurality of sensors coupled to the controller.

Any single one or any combination of the following features may be used with the above embodiment. The processor may be further configured to cause the system to select another of the plurality of fuel mix ratios based on the performance parameters of the gas turbine engine. The two or more fuels or solutions include a sustainable aviation fuel and a carbon-based aviation fuel. The performance parameters may include an operating temperature, an operating pressure, or a rotational speed of the gas turbine engine. The two or more fuels or solutions include a sustainable aviation fuel, a carbon-based aviation fuel, and a premixed solution. The two or more fuels or solutions includes water. The premixed solution includes a sustainable aviation fuel and a carbon-based aviation fuel mixture.

In another aspect of the present invention, an electronic device configured to fill a fuel manifold of a gas turbine engine includes a plurality of sensors configured to monitor performance parameters of the gas turbine engine and at least one processor coupled to the plurality of sensors, the at least one processor configured to receive one or more flight condition inputs, determine a viability of a plurality of fuel mix ratios based on the one or more flight condition inputs, select a fuel mix ratio of the plurality of fuel mix ratios, dispense two or more fuels or solutions to the gas turbine engine based on the selected fuel mix ratio, and monitor performance parameters of the gas turbine engine using the plurality of sensors coupled to the controller.

Any single one or any combination of the following features may be used with the above embodiment. The at least one processor may be further configured to cause the electronic device to select another of the plurality of fuel mix ratios based on the performance parameters of the gas turbine engine. The two or more fuels or solutions include a sustainable aviation fuel and a carbon-based aviation fuel. The performance parameters may include an operating temperature, an operating pressure, or a rotational speed of the gas turbine engine. The two or more fuels or solutions include a sustainable aviation fuel, a carbon-based aviation fuel, and a premixed solution. The premixed solution includes a sustainable aviation fuel and a carbon-based aviation fuel mixture.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1A illustrates a cross-sectional side view of an example gas turbine engine in accordance with this disclosure;
FIGURE 1B illustrates an example fuel system of the gas turbine engine of FIGURE 1A in accordance with this disclosure;
FIGURE 2 illustrates an example fuel control system for sustainable aviation fuel and aviation fuel mixing according to this disclosure;
FIGURE 3 illustrates an example method for sustainable aviation fuel and aviation fuel mixing according to this disclosure;
FIGURE 4 illustrates an example fuel control system for sustainable aviation fuel and aviation fuel mixing according to this disclosure; and
FIGURE 5 illustrates an example device for sustainable aviation fuel and aviation fuel mixing in accordance with this disclosure.

### DETAILED DESCRIPTION

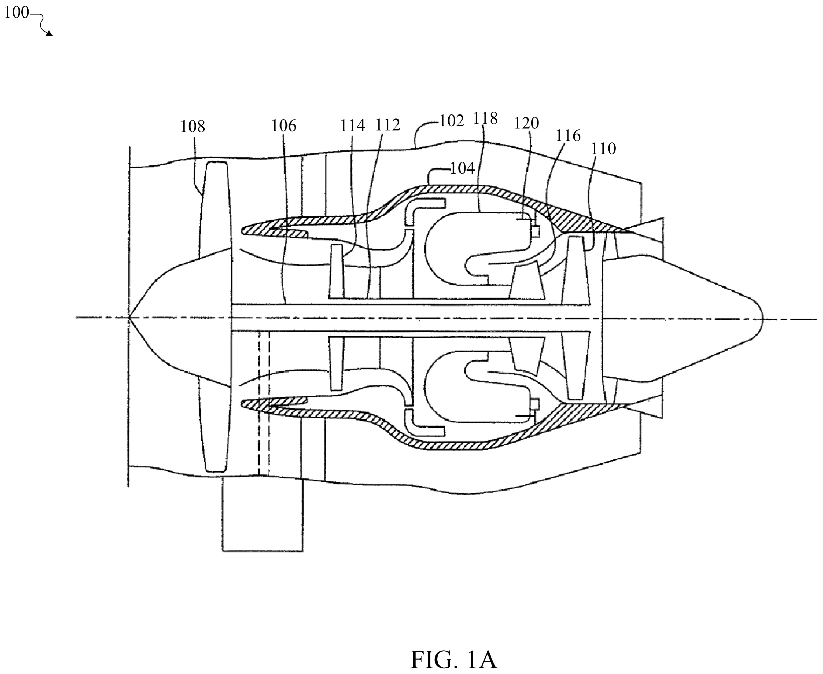

FIGURES 1A through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As introduced above, an aircraft may include an engine capable of using multiple types of fuel, including aviation fuel (AF), such as carbon-based fuels, and sustainable aviation fuels (SAF), such as hydrogen fuels. Hydrogen fuels run at a different temperature, and their flame speed is a lot higher than traditional carbon-based fuels. This introduces challenges when mixing fuels or converting from AFs to SAFs mid-flight. The same principle applies to other sustainable aviation fuels (SAFs), which also have different combustion parameters and flame characteristics when compared to traditional AFs. Additionally, switching fuels mid-flight will inherently cause some fuel mixing to occur, since constant fuel flow is required to prevent the engine from shutting off.

The present disclosure provides for systems and methods for sustainable aviation fuel and aviation fuel mixing. In particular, the present disclosure provides for a fuel control system which manages the SAF and AF fuel loads and usage. The fuel control systems of the present disclosure include determination of fuel mixing ratios between the SAF and the AF. The fuel control systems also include temperature and pressure sensors downstream that function in conjunction with controller software to control the ratio of fuels used and switching between hydrogen and AF.

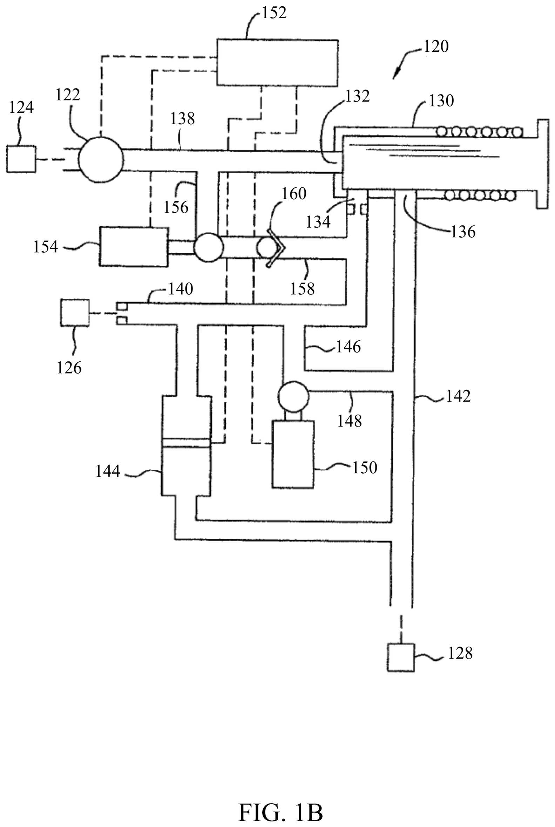

FIGURE 1A illustrates a cross-sectional side view of an example gas turbine engine system 100 in accordance with this disclosure. FIGURE 1B illustrates an example fuel system of the gas turbine engine system 100 of FIGURE 1A in accordance with this disclosure.

As shown in FIGURE 1A, the gas turbine engine system 100 is a turbofan gas turbine engine incorporating an embodiment of the present invention is presented as an example of the application of the present invention, and includes a housing or nacelle 102, a core casing 104, a low pressure spool assembly seen generally at 106 which includes a fan assembly 108 and a low pressure turbine assembly 110, and a high pressure spool assembly seen generally at 112 which includes a compressor assembly 114 and a high-pressure turbine assembly 116. The core casing 104 surrounds the low and high pressure spool assemblies 106 and 112 in order to define a main fluid path (not indicated) therethrough. In the main fluid path, there are provided a combustor seen generally at 118 and a fuel system 120 for delivery of fuel to the combustor 118 for combustion. The compressor assembly 114 provides a compressed airflow (not indicated) through the main fluid path and in communication with the combustor 118 for combustion therein.

Although the gas turbine engine system 100 is shown to be a turbofan gas turbine engine, other suitable systems of the present disclosure include other gas turbine engines (e.g., turboprop, turboshaft, or turbojet engines).

As shown in FIGURE 1B, the fuel system 120 according to one embodiment of the present invention, comprises a fuel pump 122 (a vane type of fuel pump is preferred, which is driven independent of the high pressure spool) for pressurizing the fuel to establish a fuel pressure under which fuel is delivered from a fuel source 124 through a fluidic connection of the fuel system 120 preferably to at least one pilot nozzle such as a torch nozzle 126 or some other form of primary nozzle, which is used to initialize ignition of combustion in the combustor 118 (FIGURE 1A), and a one or more fuel manifolds 128 of the combustor 118 which distributes fuel to fuel nozzles of the combustor 118 in order to supply fuel for combustion within the combustor 118. The fuel source 124 may include a plurality of fuel tanks (not shown) configured to hold SAF, AF, and other fuel solutions (e.g., water) to be provided to the one or more fuel manifolds 128. The one or more fuel manifolds 128 are in fluid communication with the combustion chamber which in turn is in a fluidic communication with a stage of the compressor assembly 114 (FIGURE 1A). The fluidic connection of the fuel system 120 further includes, for example, a minimum pressure/flow divider valve 130 having an inlet 132 and outlets 134, 136, which are normally closed under a spring force of the minimum pressure/flow divider valve 130. The minimum pressure/flow divider valve 130 is adapted to open the outlet 134 only when inlet 132 is exposed to a low pressure which is equal to or above a predetermined minimum pressure threshold, but is lower than a predetermined high pressure threshold, or to open both outlets 134 and 136 when inlet 132 is exposed to a high pressure, which is equal to or above the predetermined high pressure threshold. This will be further discussed with reference to the system operation process.

A fuel flow passage 138 interconnects the fuel pump 122 and the inlet 132 of the minimum pressure/flow divider valve 130, and a fuel flow passage 140 is connected between the outlet 134 and the pilot torch nozzle 126. There is a fuel flow passage 142 extending between the outlet 136 of the minimum pressure/flow divider valve 130 and the one or more fuel manifolds 128 in a parallel relationship with the fuel flow passage 140. It should be noted that due to the flow rate difference between the required fuel flow to the pilot torch nozzle 126 (the torch flow) and the fuel flow to the one or more fuel manifolds 128 (the manifold flow), the exit of the fuel flow passage 140 is sized in cross-section smaller than the fuel flow passage 142, thereby resulting in a high flow resistance of the fuel flow passage 140 relative to the fuel flow passage 142.

A differential pressure sensor 144 is preferably connected between the fuel flow passage 140 and the fuel flow passage 142 such that a pressure differential between fuel flow passages 140 and 142 can be monitored from time to time and particularly during engine start up while no fuel flow is delivered to the one or more fuel manifolds 128. The differential pressure sensor 144 is electrically connected to a controller 152 such that the pressure differential between the fuel flow passages 140 and 142 monitored by the differential pressure sensor 144, can be used by controller 152 as a reference signal for controlling the operation process of the fuel system 120. For example, the controller 152 may be an electrical engine control (EEC) or a full authority digital engine control (FADEC).

In practice, metering the start fuel flow using only the fuel pump characteristics is not very practical. However, when the pressure differential between the pilot nozzle fuel supply and the main manifold (which is in communication with the combustor chamber pressure) is measured, the fuel flow to the pilot nozzle can be calculated and thus controlled by adjusting the speed of the fuel pump via the controller 152.

A flow equalization solenoid valve 150 is preferably connected by fuel flow passages 146, 148 to the respective fuel flow passages 140 and 142, in a parallel relationship with the differential pressure sensor 144. The flow equalization solenoid valve 150 is a normally open valve to allow a fluidic communication between the fuel flow passages 140 and 142 when the minimum pressure/flow divider valve 130 closes outlets 134 and 136 thereof. The flow equalization solenoid valve 150 is electrically connected to and controlled by controller 152 and is adapted to close the fuel flow passages 146, 148 when a control signal is received from the controller 152.

The differential pressure sensor 144 is in fluidic connection with the respective pilot torch nozzle 126 and the one or more fuel manifolds 128 which are in turn in fluid communication with the combustion chamber, which is supplied with air pressure from the compressor, for example, pressurized air in the combustor 118 (FIGURE 1A). Therefore, the air pressure is automatically provided to the differential pressure sensor 144 as a reference pressure via fuel flow passage 142, when the flow equalization solenoid valve 150 is in the closed position and outlet 136 of the minimum pressure/flow divider valve 130 is closed (when the compressor assembly 114 is rotated either by the high-pressure turbine assembly 116 or by a starter) for monitoring the pressure differential between the fuel flow passages 140 and 142. For example, the pressure differential between the fuel flow passages 140 and 142 monitored by the differential pressure sensor 144, can be used for monitoring a fuel flow through the fuel flow passage 140 to the pilot torch nozzle 126 during the engine start-up process, and to determine when to deactivate the flow equalization solenoid valve 150 to open the fuel flow passages 146, 148 in order to allow the fuel flow to pass through the fuel flow passage 142 to the one or more fuel manifolds 128. This will be further described hereinafter.

An ecology solenoid valve 154 is preferably provided to control fuel flow passages 156, 158 which are connected to the respective fuel flow passages 138 and 140 to form a bypass over the minimum pressure/flow divider valve 130. The ecology solenoid valve 154 is normally closed and is electrically connected to controller 152. The ecology solenoid valve 154 can be controlled by controller 152 to selectively open for establishing the fluidic connection of the fuel system 120 between the fuel source 124 and the one or more fuel manifolds 128 as well as the pilot torch nozzle 126 when required.

A check valve 160 is preferably provided within the fuel flow passage 158. Should the ecology solenoid valve 154 be opened in malfunction, the check valve 160 ensures that the bypass connection over the minimum pressure/flow divider valve 130 should be used only for fuel flowing therethrough back to the fuel pump 122 and the fuel source 124, but not for fuel supply therethrough from the fuel pump 122.

Although FIGURES 1A-1B illustrate a gas turbine engine system 100 configured for ratio unit based filling of its primary and secondary fuel manifolds, various changes may be made to FIGURES 1A-1B. For example, the gas turbine engine system 100 may include additional fuel manifolds, such as a tertiary manifold, that receive fuel from the fuel source 124 from the flow divider valve 130. As an additional example, the fuel system 120 may include only a subset of the described components as required by fluids, either fuels or solutions (e.g., water), being supplied by the fuel system.

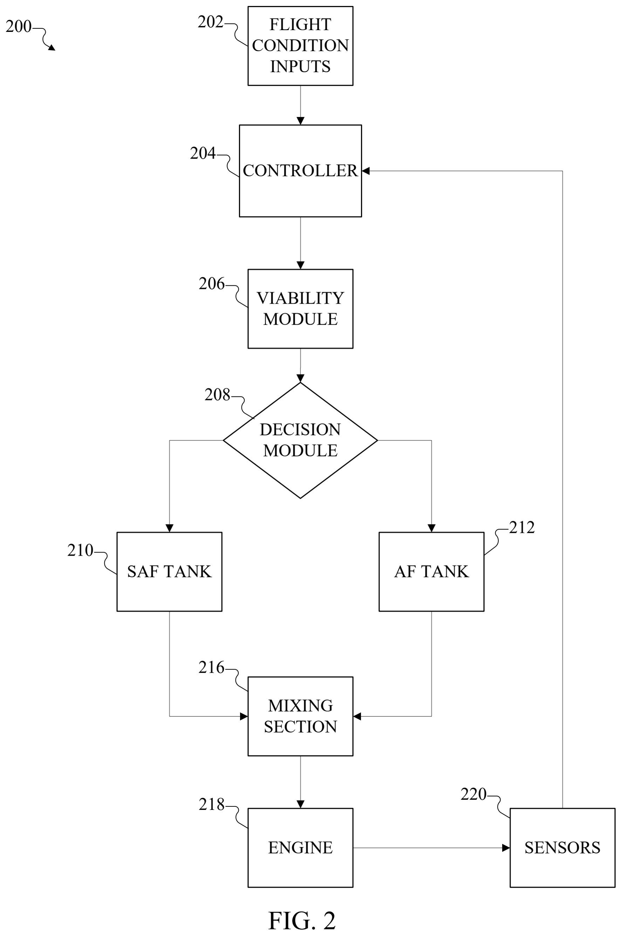

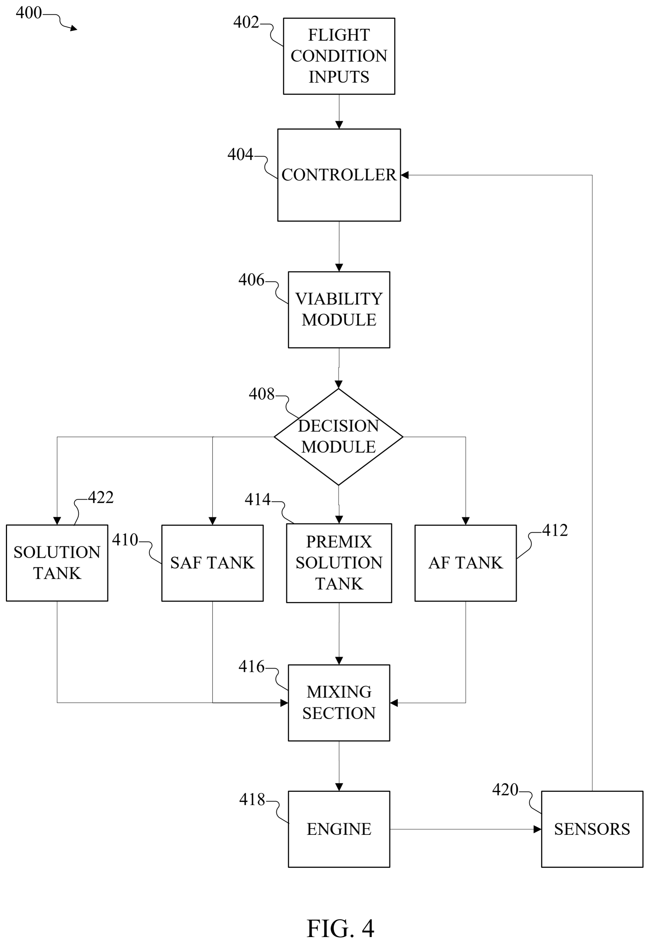

The gas turbine engine system 100 is configured for sustainable aviation fuel and aviation fuel mixing by having the controller 152 use one or more fuel ratios that dictate fuel flow into the manifold. The controller 152 may use one or more sustainable aviation fuel and aviation fuel mixing methods as shown in FIGURES 2 and 4, for example.

FIGURE 2 illustrates an example fuel control system 200 for sustainable aviation fuel and aviation fuel mixing according to this disclosure. For ease of explanation, the fuel control system 200 of FIGURE 2 is described as part of the gas turbine engine system 100 of FIGURES 1A-1B. However, the fuel control system 200 may be used with any other suitable system and any other suitable gas turbine engine system.

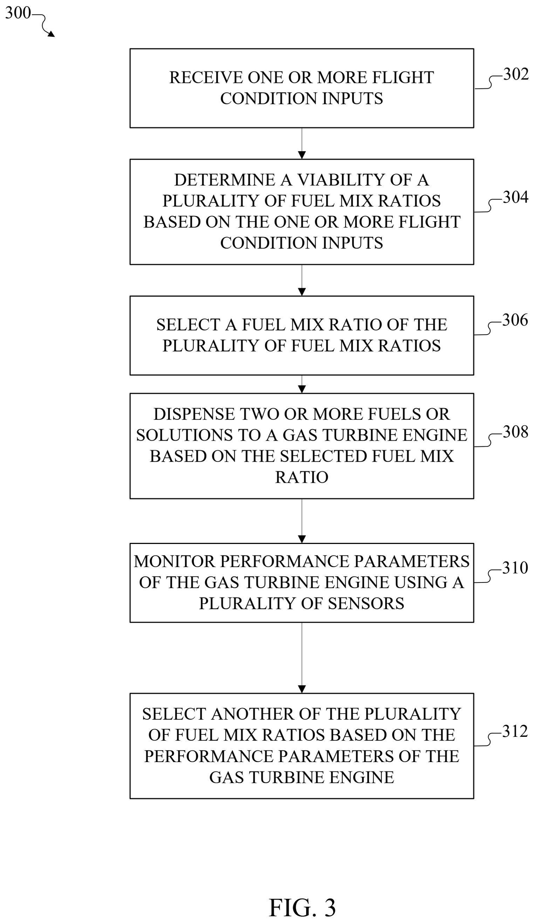

FIGURE 3 illustrates an example method 300 for sustainable aviation fuel and aviation fuel mixing according to this disclosure. For ease of explanation, the method 300 of FIGURE 3 is described as being performed using the fuel control system 200 of FIGURE 2. However, the method 300 may be used with any other suitable system and any other suitable fuel control system.

As shown in FIGURE 3, the fuel control system will receive one or more flight condition inputs at a controller at step 302. The fuel control system 200 includes a controller 204 configured to control the operation of an engine 218 and configured to receive one or more flight condition inputs 202. The engine 218 may be configured similarly to the gas turbine engine system 100 of FIGURES 1A and 1B. The one or more flight condition inputs 202 may include desired flight envelopes, velocity, and altitudes. The one or more flight condition inputs 202 may also include relevant flight requirements, such as required thrust or shaft horsepower, of a gas turbine engine. The controller 204 may be an electrical engine control (EEC) or a full authority digital engine control (FADEC).

The fuel control system will determine a viability of a plurality of fuel mix ratios based on the one or more flight condition inputs at step 304. The fuel control system 200 includes a fuel mix ratio viability module 206, which may be housed in a processor of the controller 204. The fuel mix ratio viability module 206 determines the viability of a range of fuel mix ratios based on various performance parameters, including available fuel types, amount of available fuel, fuel flow capabilities, operating temperature of the engine 218, operating pressure of the engine 218, and rotational speed of the engine 218.

The fuel control system will select a fuel mix ratio of the plurality of fuel mix ratios at step 306. The fuel control system 200 includes a fuel mix ratio decision module 208, which may be housed in a processor of the controller 204. For example, the fuel mix ratio decision module 208 of the controller 204 may digitally model operation of the engine 218 using a first fuel digital twin of the engine 218 and/or a second fuel digital twin of the engine 218. For example, the first fuel digital twin digitally models the aircraft engine operation while running on a first fuel mixture (e.g., combusting the SAF within the engine 218) to determine a first fuel mixture value of an operational parameter of the engine 218. The first fuel digital twin is thereby used to predict operational performance of the engine 218 while running on the first fuel mixture. Similarly, the second fuel digital twin digitally models the aircraft engine operation while now running on the second fuel mixture (e.g., combusting a combination of the AF and the SAF within the engine 218) to determine a second fuel mixture value of the operational parameter of the engine 218. The second fuel digital twin is thereby used to predict operational performance of the engine 218 if the engine performance characteristic is changed from the first setting to the second setting while running on the first fuel mixture and the second fuel mixture, respectively. This modeling using the first fuel digital twin and the second digital twin may be performed simultaneously, overlapping or serially (e.g., directly) one-after-another. In some embodiments, there may be more than two digital twins, such as in systems configured to evaluate several possible fuel mixtures.

The first fuel digital twin and/or the second fuel digital twin (as well as any other digital twins) may each be implemented using an onboard model, one or more lookup tables, artificial intelligence (AI) and/or the like. The first fuel digital twin and/or the second fuel digital twin (as well as any other digital twins) may each be developed based on analytical model(s), test cell data, flight test data, or the like.

The fuel mix ratio decision module 208 may combine the first fuel digital twin and the second fuel digital twin to determine optimal fuel mix ratio between the SAF, the AF fuels, and other solutions (e.g., water) to achieve desired performance characteristics.

Alternatively, the fuel mix ratio decision module 208 may process fuel data to determine a trend of engine performance characteristic(s) for the SAF and AF. For example, the controller 204 may process some or all of the SAF and AF data to determine a trend (e.g., a slope) in how an engine 218 of the select aircraft engine model deteriorates over time when running on the SAF and the AF, respectively. In another example, the fuel mix ratio decision module 208 may process some or all of the SAF and the AF data to determine a trend (e.g., an average) in fuel efficiency of an engine 218 of the select aircraft engine model when running on the SAF and AF. In still another example, the fuel mix ratio decision module 208 may process some or all of the SAF and AF data to determine a trend (e.g., an average) in operational performance of an engine 218 of the select aircraft engine model when running on the SAF and the AF. One, some, or all of the trend(s) in the engine performance characteristic(s) may be determined in general, e.g., across various different operational parameters. One, some, or all of the trend(s) in the engine performance characteristic(s) may alternatively (or also) be determined as related to (e.g., as a function of) one or more of the tracked operational parameters. These operational parameters may include, but are not limited to, the ambient temperature, the ambient pressure, the throttle setting, the aircraft altitude, the aircraft speed, the aircraft flight envelope, the aircraft flight phase and/or the aircraft engine in-service time. In this manner, the second engine performance characteristic trend(s) may have a higher fidelity. The fuel mix ratio decision module 208 may determine the engine performance characteristic trend(s) using artificial intelligence (AI) and/or other data processing techniques.

The fuel mix ratio decision module 208 may then determine an optimal fuel mix ratio between the SAF, the AF, and other solutions (e.g., water) based on the determined trends in performance characteristics of each fuel type and performance parameters of the engine 218.

The fuel control system 200 will dispense two or more fuels or other solutions (e.g., water) to a gas turbine engine based on the selected fuel mix ratio at step 308. The fuel control system 200 can include a SAF tank 210 having a sustainable aviation fuel (SAF), an AF tank 212 having a carbon-based aviation fuel (AF) (e.g., a hydrocarbon aviation fuel), and a mixing section 216. The controller 204 may have SAF dispensed from the SAF tank 210 and AF dispensed from the AF tank 212 according to the selected fuel ratio from step 306. For example, the controller 204 may have a fuel ratio of two parts SAF to 1 part AF (2:1) dispensed into a manifold of the engine 218 for a period.

The fuel control system 200 will monitor performance parameters of the gas turbine engine using a plurality of sensors coupled to the controller at step 310. The fuel control system 200 includes a plurality of sensors 220 coupled to the engine 218 and the controller 204. The plurality of sensors 220 may include at least one temperature sensor and at least one pressure sensor configured to monitor the operating temperature and operating pressure of the engine 218, respectively. For example, the plurality of sensors 220 may be positioned in a downstream portion of the engine 218.

The fuel control system 200 will select another of the plurality of fuel mix ratios based on the performance parameters of the gas turbine engine at step 312. For example, the controller 204 may receive temperature, pressure, and rotational speed readings from the plurality of sensors 220 during flight and use these readings as input in addition to the one or more flight condition inputs 202 to determine an updated fuel mix ratio (by repeating step 304 and 306). The updated fuel mix ratio will then be used in step 308. Selection of an updated fuel mix ratio may occur periodically or continuously during flight or during different phases of flight, such as engine start or following an engine surge or stall.

Advantageously, mixing fuels, such as the SAF, the AF, and other solutions (e.g., water), can increase combustion stability, produce optimal levels of thrust depending on the demand, and reduce emissions significantly. Over time, the controller 204 model may evolve to better understand optimal mixtures depending on the given conditions.

Although FIGURE 2 illustrates a fuel control system 200 configured for sustainable aviation fuel and aviation fuel mixing, various changes may be made to FIGURE 2. For example, a fuel control system may include additional fuel mixtures or solutions, such as the fuel control system shown in FIGURE 4.

Although FIGURE 3 illustrates one example of a method 300 for sustainable aviation fuel and aviation fuel mixing, various changes may be made to FIGURE 3. For example, while shown as a series of steps, various steps in FIGURE 3 may overlap, occur in parallel, or occur any number of times.

FIGURE 4 illustrates an example fuel control system 400 for sustainable aviation fuel and aviation fuel mixing according to this disclosure. For ease of explanation, the fuel control system 400 of FIGURE 4 is described as part of the gas turbine engine system 100 of FIGURES 1A-1B. However, the fuel control system 400 may be used with any other suitable system and any other suitable gas turbine engine system. Further, the fuel control system 400 of FIGURE 4 may execute the method 300 of FIGURE 3.

The fuel control system 400 is configured similarly to the fuel control system 200 except as otherwise described. For example, the fuel control system 400 includes a controller 404 configured to receive one or more flight condition inputs 402 then use the one or more flight condition inputs 402 to determine viability of a plurality of fuel mix ratios using a fuel mix ratio viability module 406 before selecting a fuel mix ratio of the plurality of fuel mix ratios in a fuel mix ratio decision module 408. The fuel control system 400 can include a SAF tank 410, an AF tank 412, and a premixed solution tank 414.

The premixed solution tank 414 may include a premixed solution. For example, the premixed solution may have a preset SAF:AF fuel mix ratio. The premixed solution may also include other non-fuel solutions. The premixed solution may be another fuel option that the controller 404 may select in-flight instead of strictly mixing fuels while during flight. The premixed fuel ratio may be determined from test data and the exact ratio used in flight may be further fine-tuned and adjusted by mixing in other SAF or AF mid-flight. The premixed solution may include mixtures of SAFs and AFs where the SAF may be the same or different than the SAF held in the SAF tank 410. Similarly, the AF held in the premixed solution tank 414 as part of the premixed solution may be the same or different than the AF held in the AF tank 412.

The fuel control system 400 may optionally include a solution tank 422 to supply other fluids, such as water vapor, configured to achieve desired combustion or reduce NOX emissions in the fuel mixing section 416 of the engine 418. As such, the plurality of fuel mix ratios are ratios between the SAF, the AF, the premixed solution, and any other solutions (e.g., water). Depending on the engine demand, the controller 404 may decide when to mix fuels or other fluids to prioritize emissions or power output. The fuel control system 400 also includes plurality of sensors 420 configured to provide performance parameters to the controller 404.

Although FIGURE 4 illustrates a fuel control system 400 configured for sustainable aviation fuel and aviation fuel mixing, various changes may be made to FIGURE 4.

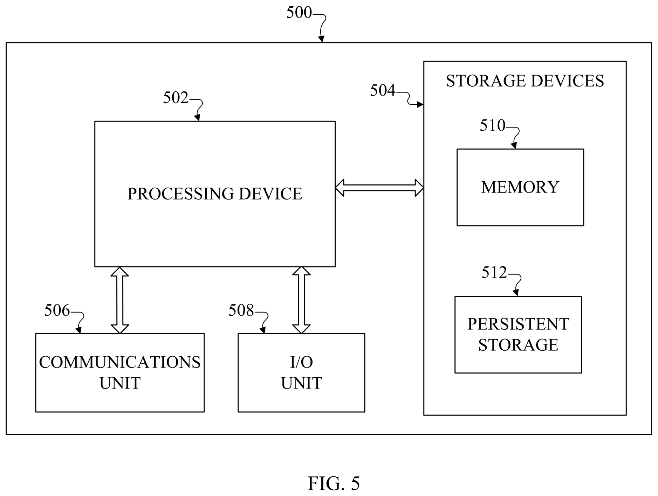

FIGURE 5 illustrates an example device 500 for sustainable aviation fuel and aviation fuel mixing according to this disclosure. One or more instances of the device 500 (or portions thereof) may, for example, be used to at least partially implement the functionality of the gas turbine engine system 100 of FIGURES 1A and 1B. However, the functionality of the gas turbine engine system 100 may be implemented in any other suitable manner.

As shown in FIGURE 5, the device 500 denotes a computing device or system, such as the controller 152 of FIGURES 1A-1B, that includes at least one processor 502, at least one storage device 504, at least one communications unit 506, and at least one input/output (I/O) unit 508. The processor 502 may execute instructions that can be loaded into a memory 510. The processor 502 includes any suitable number(s) and type(s) of processors or other devices in any suitable arrangement. Example types of processors 502 include one or more microprocessors, microcontrollers, DSPs, ASICs, GPUs, FPGAs, or discrete circuitry.

The memory 510 and a persistent storage 512 are examples of storage devices 504, which represent any structure(s) capable of storing and facilitating retrieval of information (such as data, program code, and/or other suitable information on a temporary or permanent basis). The memory 510 may represent a random access memory or any other suitable volatile or non-volatile storage device(s). The persistent storage 512 may contain one or more components or devices supporting longer-term storage of data, such as a read only memory, hard drive, Flash memory, or optical disc.

The communications unit 506 supports communications with other systems or devices. For example, the communications unit 506 can include a network interface card or a wireless transceiver facilitating communications over a wired or wireless network. The communications unit 506 may support communications through any suitable physical or wireless communication link(s).

The I/O unit 508 allows for input and output of data. For example, the I/O unit 508 may provide a connection for user input through a keyboard, mouse, keypad, touchscreen, or other suitable input device. The I/O unit 508 may also send output to a display or other suitable output device. Note, however, that the I/O unit 508 may be omitted if the device 500 does not require local I/O, such as when the device 500 can be accessed remotely or operated autonomously.

In some embodiments, the instructions executed by the processor 502 can include instructions that implement all or portions of the functionality of the gas turbine engine system 100 described above. For example, the instructions executed by the processor 502 can include instructions for sustainable aviation fuel and aviation fuel mixing as described above.

Although FIGURE 5 illustrates one example of a device 500 for sustainable aviation fuel and aviation fuel mixing, various changes may be made to FIGURE 5. For example, computing devices and systems come in a wide variety of configurations, and FIGURE 5 does not limit this disclosure to any particular computing device or system.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method comprising:
receiving one or more flight condition inputs (202; 402) at a controller (152; 204; 404);
determining a viability of a plurality of fuel mix ratios based on the one or more flight condition inputs (202; 402);
selecting a fuel mix ratio of the plurality of fuel mix ratios;
dispensing two or more fuels or solutions to a gas turbine engine (100; 218; 418) based on the selected fuel mix ratio; and
monitoring performance parameters of the gas turbine engine (100; 218; 418) using a plurality of sensors (144; 220; 420) coupled to the controller (152; 204; 404).

2. The method of Claim 1, further comprising:
selecting another of the plurality of fuel mix ratios based on the performance parameters of the gas turbine engine (100; 218; 418).

3. The method of Claim 1 or 2, wherein the two or more fuels comprise a sustainable aviation fuel and a carbon-based aviation fuel.

4. The method of Claim 1, 2 or 3, wherein the performance parameters comprise an operating temperature, an operating pressure, or a rotational speed of the gas turbine engine (100; 218; 418).

5. The method of any preceding claim, wherein the two or more fuels comprise a sustainable aviation fuel, a carbon-based aviation fuel, and a premixed solution.

6. The method of Claim 5, wherein the premixed solution comprises a sustainable aviation fuel and a carbon-based aviation fuel mixture.

7. The method of any preceding claim, wherein the two or more fuels or solutions include water.

8. An electronic device (500) configured to fill a fuel manifold of a gas turbine engine (100; 218; 418), the electronic device (500) comprising:
a plurality of sensors (144; 220; 420) configured to monitor performance parameters of the gas turbine engine (100; 218; 418); and
at least one processor (502) coupled to the plurality of sensors (144; 220; 420), the at least one processor (502) is configured to:
receive one or more flight condition inputs (202; 402);
determine a viability of a plurality of fuel mix ratios based on the one or more flight condition inputs (202; 402);
select a fuel mix ratio of the plurality of fuel mix ratios;
dispense two or more fuels or solutions to the gas turbine engine (100; 218; 418) based on the selected fuel mix ratio; and
monitor performance parameters of the gas turbine engine (100; 218; 418) using the plurality of sensors (144; 220; 420).

9. The electronic device (500) of Claim 8, wherein the at least one processor (502) is further configured to cause the electronic device (500) to:
select another of the plurality of fuel mix ratios based on the performance parameters of the gas turbine engine (100; 218; 418).

10. The electronic device (500) of Claim 8 or 9, wherein the two or more fuels or solutions comprise a sustainable aviation fuel and a carbon-based aviation fuel.

11. The electronic device (500) of Claim 8, 9 or 10, wherein the performance parameters comprise an operating temperature, an operating pressure, or a rotational speed of the gas turbine engine (100; 218; 418).

12. The electronic device (500) of any of Claims 8 to 11, wherein the two or more fuels or solutions comprise a sustainable aviation fuel, a carbon-based aviation fuel, and a premixed solution.

13. The electronic device (500) of Claim 12, wherein the premixed solution comprises a sustainable aviation fuel and a carbon-based aviation fuel mixture.

14. The system of any of Claims 8 to 13, wherein the two or more fuels or solutions include water.

15. A system comprising:
a gas turbine engine (100; 218; 418);
the electronic device (500) of any of claims 8 to 14, the plurality of sensors (144; 220; 420) configured to monitor performance parameters of the gas turbine engine (100; 218; 418); and
a controller (152; 204; 404) coupled to the plurality of sensors (144; 220; 420) and the gas turbine engine (100; 218; 418), the controller (152; 204; 404) comprising the at least one processor (502).
